# FASCICULE DE BREVET EUROPEEN

(11) **EP 0 434 552 B1**
(45) Date de publication et mention de la délivrance du brevet: **03.02.1993**
(21) Numéro de dépôt: 90403662.1
(22) Date de dépôt: 19.12.1990
(51) Int. Cl.: B60J 5/04

(54) **Porte de véhicule automobile**
Kraftfahrzeugtür
Motor vehicle door

(30) Priorité: 19.12.1989 FR 8917504
(43) Date de publication de la demande: 26.06.1991
(73) Titulaire: AUTOMOBILES PEUGEOT, 75116 Paris (FR); AUTOMOBILES CITROEN, 92200 Neuilly-sur-Seine (FR)
(72) Inventeur: Dossin, Jacques, F-92400 Courbevoie (FR)
(74) Mandataire: Boivin, Claude

(56) Documents cités:
- EP-A- 0 286 836

## Description

La présente invention concerne une porte de véhicule automobile du type comprenant un panneau intérieur et un panneau extérieur qui est formé d'un encadrement extérieur fixe et d'un panneau inférieur amovible. Elle a pour objet un perfectionnement apporté à cette porte dans le but de faciliter le montage et le démontage du panneau amovible.

La porte selon l'invention est caractérisée en ce que le panneau amovible se met en place par une translation suivant une direction sensiblement verticale de bas en haut et par une translation suivant une direction sensiblement horizontale d'arrière en avant, et qu'il est maintenu par des moyens d'agrafage et des moyens de verrouillage.

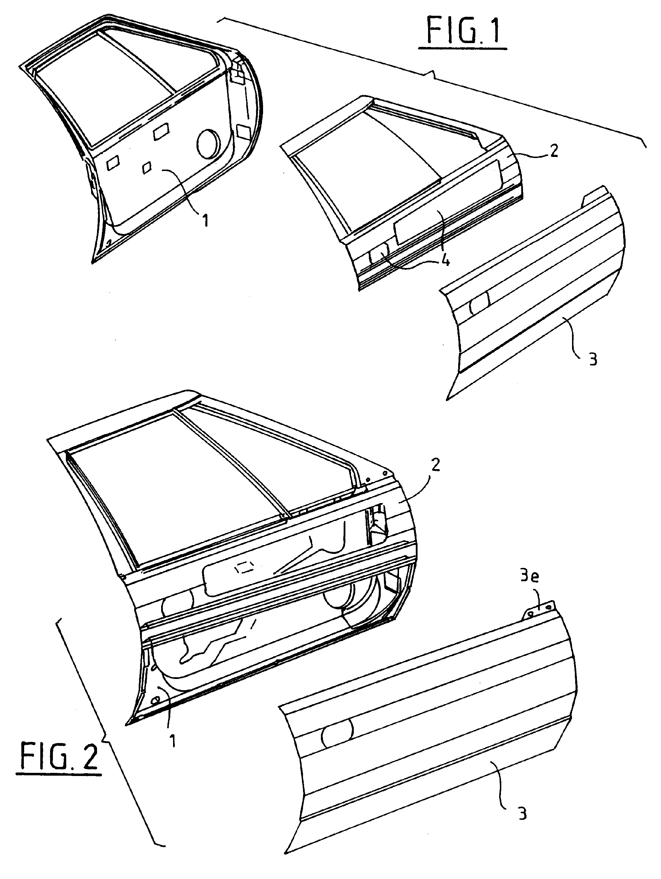

On a décrit ci-après, à titre d'exemple non limitatif, un mode de réalisation de la porte selon l'invention, avec référence aux dessins annexés dans lesquels
La Figure 1 est une vue en perspective de la porte, ses éléments étant représentés séparés;
La Figure 2 en est une vue en perspective, le panneau amovible étant représenté séparé;
La Figure 3 en est une vue en perspective, ses éléments étant assemblés entre eux;
La Figure 4 en est une vue en coupe suivant IV-IV de la Figure 3;
La Figure 5 en est une vue en coupe suivant V-V de la Figure 4;
La Figure 6 est une vue en coupe du bord inférieur de la porte;
Les Figures 7 et 8 sont des vues en coupe de la porte respectivement suivant VII-VII et VIII-VIII de la Figure 3.

Telle qu'elle est représentée aux dessins, la porte de véhicule selon l'invention comprend un panneau intérieur 1 et un panneau extérieur qui est formé d'un encadrement extérieur fixe 2 et d'un panneau inférieur amovible 3. L'encadrement extérieur 2 est fixé à demeure au panneau 1. Il est limité en partie basse par une ligne qui joint sensiblement les hauteurs de la charnière basse à l'avant et de la serrure à l'arrière de la porte; il présente des ajours tels que 4 pour diminuer son poids et permettre l'accès pour le montage et le démontage des équipements à l'intérieur de la porte. Le panneau amovible 3 est en un matériau de synthèse, par exemple un mélange à base de polypropylène, de polyamide, de polycarbonate ou de polyurée qui peut être armé de fibres, ou de billes ou écailles de verre.

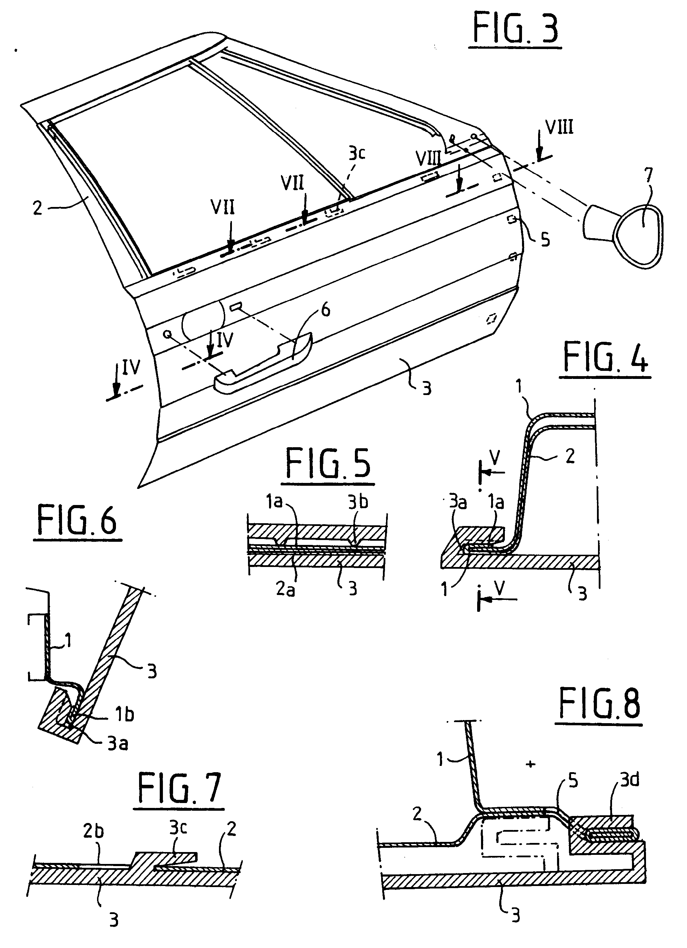

A son bord arrière le panneau 3 comporte une gorge 3a dans laquelle peuvent s'engager des retours 1a du panneau intérieur 1 et 2a de l'encadrement extérieur 2 (Figure 4). Cette gorge est relativement large et présente des bossages intérieurs 3b qui assurent le maintien (Figure 5). Elle se prolonge dans le bord inférieur du panneau et peut recevoir le bord inférieur 1b du panneau intérieur 1 (Figure 6).

A son bord supérieur, le panneau 3 comporte des pattes 3c venues de moulage et dirigées vers l'avant; ces pattes peuvent s'engager et s'agrafer dans des ouvertures 2b de l'encadrement extérieur 2 (Figure 7).

Enfin, sur son bord avant, le panneau 3 comporte des pattes 3d venues de moulage, dirigées vers l'avant et pouvant s'agrafer dans des ouvertures 5 du panneau intérieur 1 et de l'encadrement extérieur 2 (Figure 8).

Pour monter le panneau 3, on le présente sur l'encadrement 2 décalé longitudinalement vers l'arrière et vers le bas, d'une cote au moins égale à la longueur du retour du panneau intérieur. Puis on le déplace dans un premier temps de bas en haut de façon à assurer l'engagement dans la gorge 3a du bord inférieur 1b du panneau intérieur 1; en fin de mouvement, les pattes 3c et 3d se logent dans les trous 2b et 5. Puis dans un second temps, on déplace le panneau 3 d'arrière en avant de façon d'une part à assurer l'engagement dans la gorge 3a des retours 1a et 2a du panneau intérieur 1 et de l'encadrement extérieur 2 et d'autre part à agrafer les pattes 3c et 3d.

Il ne reste plus qu'à mettre en place la poignée de porte 6 et le rétroviseur 7 et à les fixer sur le panneau intérieur 1, ce qui verrouille en position le panneau amovible 3; la référence 3e désigne une patte de fixation du rétroviseur qui est boulonnée sur l'encadrement extérieur 2 en même temps que le rétroviseur.

Le panneau amovible 3 a une bonne résistance aux petits chocs. Son mode de fixation permet son montage et son démontage rapide en cas de réparation ou de remplacement. Les mécanismes tels que le lève-vitre peuvent être mis en place depuis l'extérieur de la porte, avant la mise en place de la partie amovible 3; il n'est donc pas nécessaire de prévoir des trous de dimensions importantes dans le panneau intérieur 1.

## Revendications

1. Porte de véhicule automobile comprenant un panneau intérieur (1) et un panneau extérieur qui est formé d'un encadrement externe fixe (2) et d'un panneau inférieur amovible (3),
caractérisé en ce que le panneau amovible (3) se met en place par une translation suivant une direction sensiblement verticale de bas en haut et par une translation suivant une direction sensiblement horizontale d'arrière en avant, et qu'il est maintenu par des moyens d'agrafage et des moyens de verrouillage.

2. Porte de véhicule automobile selon la revendication 1,
caractérisée en ce que le matériau constitutif du panneau amovible est un matériau de synthèse.

3. Porte de véhicule automobile selon la revendication 2,
caractérisée en ce que le matériau constitutif du panneau amovible est choisi parmi le polypropylène, les polyamides, les polycarbonates et le polyurée.

4. Porte de véhicule automobile selon la revendication 2 ou 3,
caractérisée en ce que le matériau constitutif du panneau amovible est renforcé de fibres, de billes ou écailles de verre.

5. Porte de véhicule automobile selon l'une des revendications 1 à 4,
caractérisée en ce que le panneau amovible (3) comporte à son bord arrière une gorge (3a) dans laquelle peuvent s'engager des retours (1a) du panneau extérieur (1 et 2a) de l'encadrement extérieur (2).

6. Porte de véhicule automobile selon l'une des revendications 1 à 5,
caractérisée en ce que le panneau amovible (3) comporte à son bord inférieur une gorge (3a) dans laquelle peut s'engager le bord inférieur du panneau intérieur (1).

7. Porte de véhicule selon l'une des revendications 1 à 6,
caractérisée en ce que le panneau amovible (3) comporte à son bord supérieur des pattes (3c) dirigées vers l'avant et pouvant s'engager et s'agrafer dans des ouvertures (2b) de l'encadrement extérieur (2).

8. Porte de véhicule automobile selon l'une des revendications 1 à 7,
caractérisée en ce que le panneau amovible (3) comporte à son bord avant des pattes (3d) dirigées vers l'avant et pouvant s'engager et s'agrafer dans des ouvertures (5) du panneau intérieur (1) et de l'encadrement extérieur (2).

9. Porte de véhicule automobile selon l'une des revendications 1 à 8,
caractérisée en ce que les moyens de verrouillage comprennent un élément tel que poignée (6) ou rétroviseur extérieur (7), le panneau (3) étant pris en sandwich entre cet élément et les moyens de fixation de celui-ci sur une autre partie de la porte.

## Patentansprüche

1. Kraftfahrzeugtür mit einem Innenblatt (1) und einem Außenblatt, das aus einem festen Außenrahmen (2) und einem abnehmbaren unteren Türblatt (3) besteht, **dadurch gekennzeichnet**, daß das abnehmbare Türblatt durch ein zuerst weitgehend senkrechtes Verschieben von unten nach oben und ein anschließend weitgehend waagrechtes Verschieben von hinten nach vorn erfolgt und daß es mit Hilfe von Klemm- und Verriegelungsvorrichtungen festgehalten wird.

2. Kraftfahrzeugtür nach Patentanspruch 1, dadurch gekennzeichnet, daß das abnehmbare Blatt aus synthetischem Material besteht.

3. Kraftfahrzeugtür nach Patentanspruch 2, dadurch gekennzeichnet, daß das abnehmbare Blatt aus Polypropylen, Polyamid, Polykarbonat oder Polyurethan besteht.

4. Kraftfahrzeugtür nach Patentanspruch 2 oder 3, dadurch gekennzeichnet, daß das Fertigungsmaterial des abnehmbaren Blattes durch Glasfaser, Glaskugeln oder Glasschuppen verstärkt ist.

5. Kraftfahrzeugtür nach Patentanspruch 1 bis 4, dadurch gekennzeichnet, daß das abnehmbare Blatt (3) an der Hinterkante eine Hohlkehle (3a) besitzt, in die die Umschläge (1a) des Innenblattes (1) und (2a) des Außenrahmens (2) eingesetzt werden können.

6. Kraftfahrzeugtür nach Patentanspruch 1 bis 5, dadurch gekennzeichnet, daß das abnehmbare Blatt (3) an der Unterkante eine Hohlkehle (3a) besitzt, in die die Unterkante des Innenblattes (1) eingesetzt werden kann.

7. Kraftfahrzeugtür nach Patentanspruch 1 bis 6, dadurch gekennzeichnet, daß das abnehmbare Blatt (3) an der Oberkante nach vorn gerichtete Klemmen (3c) besitzt, die in die Öffnungen (2b) des Außenrahmens (2) eingeführt und eingehakt werden können.

8. Kraftfahrzeugtür nach Patentanspruch 1 bis 7, dadurch gekennzeichnet, daß das abnehmbare Blatt (3) an der Vorderkante nach vorn gerichtete Klemmen (3d) besitzt, die in die Öffnungen (5) des Innenrahmens (1) des Außenrahmens (2) eingeführt und eingehakt werden können.

9. Kraftfahrzeugtür nach Patentanspruch 1 bis 8, dadurch gekennzeichnet, daß die Vorrichtungen zum Verriegeln des Blattes (3) aus Bauteilen wie Türgriff (6) oder Rückspiegel (7) bestehen, wobei das Blatt (3) zwischen diesen Bauteilen und deren Befestigungselementen an einem anderen Teil der Tür festgehalten wird.

## Claims

1. Motor vehicle door including one internal panel (1) and one external panel formed of one fixed external framing (2) and one movable lower panel (3),
wherein the movable panel (3) is positioned via a movement along a direction approximately vertical from bottom to top and via one movement along a direction approximately horizontal from rear to the front and which is kept in position by hooking and locking means.

2. Motor vehicle door according to claim 1,
wherein the material constituting the movable panel is a synthetic material.

3. Motor vehicle door according to claim 2,
wherein the material constituting the movable panel is selected from the following substances, namely polypropylene, polyamides, polycarbonates and polyurethane.

4. Motor vehicle door according to claim 2 or 3,
wherein the material constituting the movable panel is reinforced with fibres, balls or glass shellings.

5. Motor vehicle door according to any one of claims 1 to 4,
wherein the movable panel (3) comprises at its rear edge a throat (3a) able to engage twists (1a) of the external panel (1 and 2a) of the external framing (2).

6. Motor vehicle door according to any one of claims 1 to 5,
wherein the movable panel (3) comprises at its lower edge a throat (3a) able to engage the lower edge of the internal panel (1).

7. Motor vehicle door according to any one of claims 1 to 6,
wherein the movable panel (3) comprises at its upper edge brackets (3c) directed towards the front and able to be engaged and hooked inside openings (2b) of the external framing (2).

8. Motor vehicle door according to any one of claims 1 to 7,
wherein the movable panel (3) comprises at its front edge brackets (3d) directed towards the front and able to be engaged and hooked inside openings (5) of the internal panel (1) and the external framing (2).

9. Motor vehicle door according to any one of claims 1 to 8,
wherein the locking means include one element, such as a handle (6) or external rear driving mirror (7), the panel being sandwiched between this element and the fixing means of said element on another portion of the door.
